# FASCICULE DE BREVET EUROPEEN

(11) **EP 1 349 750 B1**
(45) Date de publication et mention de la délivrance du brevet: **31.08.2005**
(21) Numéro de dépôt: 02711957.7
(22) Date de dépôt: 14.01.2002
(51) Int. Cl.: B60R 13/08

(54) **AGENCEMENT POUR LA FIXATION D'UN ELEMENT D'INSONORISATION SOUPLE SUR LE TABLIER AVANT D'UN VEHICULE AUTOMOBILE**
AUSLEGUNG ZUR BEFESTIGUNG EINES FLEXIBLEN SCHALLDÄMPFUNGSELEMENTS AN EINER SCHOTTWAND EINES KRAFTFAHRZEUGS
LAYOUT FOR FIXING A FLEXIBLE SOUNDPROOFING ELEMENT ON A MOTOR VEHICLE FIREWALL

(30) Priorité: 12.01.2001 FR 0100358
(43) Date de publication de la demande: 08.10.2003
(73) Titulaire: Renault s.a.s., 92100 Boulogne Billancourt (FR)
(72) Inventeur: CAFFARRI, Sergio, F-78800 Houilles (FR); LANGUILLIER, Michel, F-78180 Montigny Le Bretonneux (FR); LEYRAT, Lionel, F-92100 Boulogne Billancourt (FR)
(86) Numéro de dépôt international: PCT/FR2002/000134
(87) Numéro de publication internationale: WO 2002/055342

(56) Documents cités:
- EP-A- 0 456 531
- WO-A-97/17508
- DE-A- 3 402 731
- DE-A- 3 604 289
- DE-A- 4 123 883
- DE-A- 4 212 704
- DE-U- 8 709 065

## Description

L'invention concerne un agencement pour la fixation d'un premier élément d'insonorisation sur le tablier avant d'un véhicule automobile.

Le tablier est une cloison d'orientation globalement verticale et transversale qui doit permettre d'assurer un confort et une sécurité maximum aux passagers du véhicule.

Une fonction importante du tablier avant est d'assurer la sécurité des passagers du véhicule, notamment lors d'un choc avant. Il doit notamment éviter qu'il y ait un contact direct entre la partie avant et l'habitacle du véhicule.

Le tablier avant réalise aussi l'isolation phonique de l'habitacle. Des éléments d'insonorisation, tels que des mousses, sont par exemple collés sur un élément métallique du tablier pour absorber une partie importante des vibrations du groupe motopropulseur et diminuer ainsi le niveau sonore et les vibrations dans l'habitacle.

Une planche de bord est agencée dans la partie supérieure du tablier en dessous du niveau du pare-brise. Elle comporte par exemple, du côté du conducteur, des dispositifs de commande et de contrôle du véhicule tel qu'un indicateur de vitesse ou une commande des phares et d'un avertisseur sonore. Elle peut aussi comporter, du côté du passager, des dispositifs de confort tels qu'une boîte à gants. De plus elle est traversée par la colonne de direction qui est reliée à son extrémité avant à un dispositif d'orientation des roues avant, et à son extrémité arrière à un volant de direction.

Des vibrations peuvent être transmises à la planche de bord, notamment par la colonne de direction qui la traverse. Ces vibrations sont transmises à l'habitacle, ce qui nuit au confort des passagers.

Afin de limiter la production de nuisance acoustique, il est connu de fixer sur le tablier avant et sous la planche de bord, des éléments souples d'insonorisation.

Il est fréquent qu'un bloc central qui, en général, comporte les commandes des moyens de régulation de la température de l'habitacle, s'étende entre le plancher du véhicule et la face inférieure de la planche de bord. Le bloc central définit alors deux zones de la planche de bord l'une en vis-à-vis du conducteur, l'autre en vis-à-vis du passager. Sur chacune de ces zones est fixé un élément d'insonorisation appelé élément d'insonorisation conducteur et élément d'insonorisation passager respectivement.

Les éléments d'insonorisation sont généralement constitués d'une mousse expansée présentant des caractéristiques d'insonorisation acoustique qui est revêtue d'un matériau de renfort qui peut aussi remplir une fonction d'esthétique. En effet, le matériau de renfort peut être une moquette d'habillage de l'intérieur de l'habitacle.

La publication DE-U-8709065, qui divulgue les caractéristiques du préambule de la revendication 1, et le document WO-A-9717508 décrivent des propositions de montage d'isolant.

Du côté passager, un opérateur fixe le bord avant de l'élément d'insonorisation passager sur le tablier avant, puis le bord arrière sur la face inférieure de la planche de bord.

La fixation des éléments d'insonorisation est obtenue par des assemblages vissés.

Un tel assemblage présente plusieurs inconvénients. De façon à renforcer ses zones de fixation, l'élément d'insonorisation du passager doit comporter des inserts, ce qui augmente son coût de fabrication.

De plus, les zones de fixation du tablier avant, et de la face inférieure de la planche de bord, présente une accessibilité réduite. L'opérateur doit alors prendre des positions inconfortables ce qui augmente sa fatigue ainsi que le temps de montage.

Du coté conducteur, la fixation du bord avant de l'élément d'insonorisation est similaire à celle de l'élément d'insonorisation passager.

Cependant, de manière générale, lorsque cette opération est réalisée, la colonne de direction n'est pas encore fixée, ce qui ne permet pas la fixation sur la planché de bord du bord arrière de l'élément d'insonorisation conducteur. Ainsi, après l'opération de fixation du bord avant de l'élément d'insonorisation, le bord arrière est mis en attente sur les pédales de commande telles que la pédale d'accélérateur ou la pédale de frein. Lorsque la colonne de direction est fixée dans la planche de bord, le bord arrière de l'élément d'insonorisation conducteur est vissé sur la face inférieure de la planche de bord.

Dans ce cas, l'opérateur réalisant la fixation de l'élément d'insonorisation du côté conducteur doit procéder en deux étapes distinctes, c'est-à-dire qu'il doit rentrer dans l'habitacle du véhicule à deux reprises pour fixer l'avant et l'arrière respectivement de l'élément d'insonorisation dans une position inconfortable.

Ainsi, la fixation des éléments d'insonorisation entre le tablier avant et la face inférieure de la planche de bord est longue et difficile.

Dans le but de fournir une solution à ces problèmes, l'invention propose un agencement pour la fixation d'un premier élément d'insonorisation sur le tablier avant d'un véhicule automobile selon la revendication 1.

Selon d'autres caractéristiques de l'invention :
- la forme en creux est réalisée dans le second élément d'insonorisation du tablier avant, lors de sa fabrication ;
- le premier et/ou le second élément d'insonorisation est/sont constitué/s d'au moins un premier et/ou d'un second matériau absorbant acoustique dont une face est revêtue au moins partiellement d'au moins un premier et/ou un second matériau de renfort respectivement, qui comporte une structure et/ou une composition différente de celle dudit matériau absorbant ;
- le premier et/ou le second matériau absorbant acoustique est/sont constitué/s d'une première et/ou d'une seconde mousse respectivement ;
- le second matériau de renfort revêt la face arrière du second matériau absorbant acoustique du second élément d'insonorisation ;
- le premier et/ou le second matériau de renfort comporte/nt une première et/ou une seconde armature textile respectivement ;
- la zone de fixation avant du premier élément d'insonorisation est un bord avant du premier matériau de renfort qui coopère avec la forme en creux de la zone d'orientation globalement verticale du tablier ;
- la zone de fixation avant du premier élément d'insonorisation est emboîtée dans la forme en creux ;
- la zone de fixation avant du premier élément d'insonorisation pénètre longitudinalement dans la face arrière de la zone d'orientation globalement verticale du tablier, dans la forme en creux ;
- la zone de fixation avant du premier élément d'insonorisation comporte au moins une languette, et la largeur de la forme en creux correspond sensiblement à la largeur de la languette ;
- la languette s'étend sur la totalité de la largeur du premier élément d'insonorisation ;
- l'extrémité arrière du premier élément d'insonorisation comporte des moyens de fixation qui coopèrent avec des moyens complémentaires de fixation situés sous la planche de bord du véhicule, de façon que, lors de l'assemblage du premier élément d'insonorisation, celui-ci est fixé à l'avant sur le tablier avant et à l'arrière sous la planche de bord ;
- les moyens de fixation et les moyens complémentaires de fixation sont des moyens adhésifs ;
- les moyens de fixation et les moyens complémentaires de fixation sont du type à boucles et à crochets complémentaires.

D'autres caractéristiques et avantages de l'invention apparaîtront à la lecture de la description détaillée qui suit pour la compréhension de laquelle on se reportera aux dessins annexés parmi lesquels :
- la figure 1 représente schématiquement la partie avant d'un habitacle de véhicule automobile dans laquelle, un élément d'insonorisation est fixé sur le tablier avant et sur la face inférieure de la planche de bord selon l'état de la technique ;
- la figure 1a représente en détail l'élément d'insonorisation qui est fixé sur la face inférieure de la planche de bord ;
- la figure 2 représente schématiquement une vue similaire à celle représentée à la figure précédente, la fixation de l'élément d'insonorisation étant réalisée selon l'invention ;
- la figure 3 représente schématiquement à grande échelle le bord avant de l'élément d'insonorisation ainsi que le tablier avant avant et pendant leur fixation selon l'invention ;
- la figure 4 est une vue schématique à grande échelle de l'élément d'insonorisation conducteur qui est fixé, selon l'invention, sur le tablier avant, dans une position d'attente de la fixation de la colonne de direction ;
- la figure 5 est une vue en perspective et en détail de la zone de fixation avant de l'élément d'insonorisation ;
- la figure 6 est une vue similaire à celle représentée à la figure précédente, selon une variante de réalisation de la zone de fixation avant de l'élément d'insonorisation.

Pour faciliter la compréhension de la description et des revendications on utilisera une orientation avant arrière conformément à l'orientation gauche droite des figures.

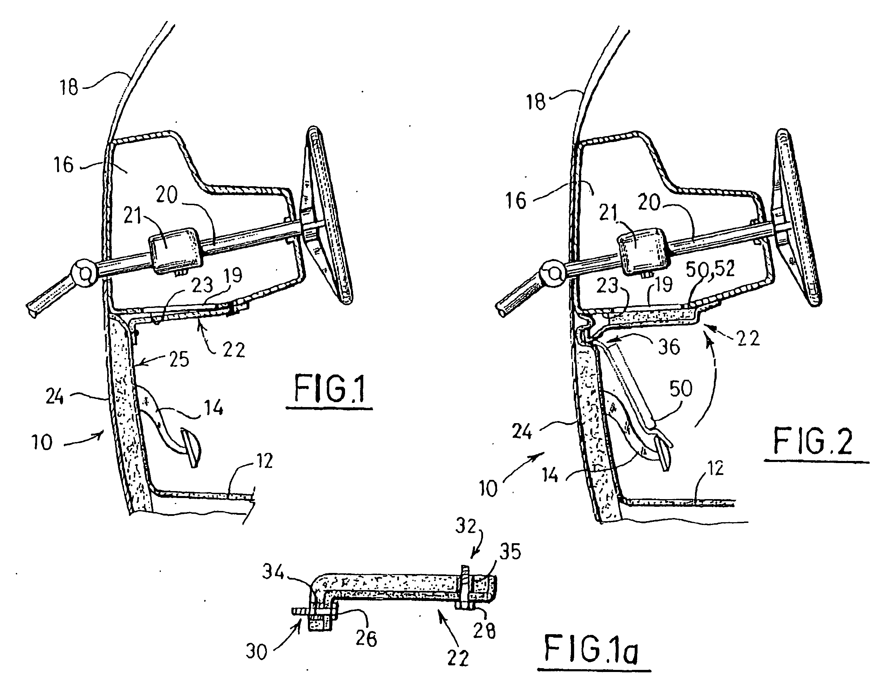

La figure 1 représente en section longitudinale un tablier avant 10 qui sépare la partie ou compartiment avant dans laquelle est agencé un groupe motopropulseur et l'habitacle du véhicule.

La structure du véhicule, non représentée, est constituée, notamment à l'avant, par des éléments de support qui ont, outre leur fonction de maintien des éléments tels que les organes du groupe motopropulseur, une fonction d'absorption de l'énergie cinétique produite par un choc.

Le tablier avant 10 est situé globalement dans un plan vertical. II est aussi perpendiculaire au plancher 12 du véhicule sur lequel il est fixé.

Un levier d'une pédale 14 de commande du véhicule, telle qu'une pédale de frein qui est représentée sur les figures 1 et 2, traverse le tablier avant 10.

Une planche de bord 16 est située sous pare-brise 18 dans la partie supérieure du tablier avant 10.

La planche de bord 16 comporte notamment des dispositifs de commande et de contrôle du véhicule. Elle est traversée par une colonne de direction 20.

Une ouverture 19 est réalisée dans la paroi inférieure de la planche de bord 16, de façon que lors du montage de la colonne de direction 20 dans la planche de bord 16, un opérateur puisse la fixer par rapport à la structure du véhicule en verrouillant un dispositif de fixation 21.

L'ouverture 19 permet donc le passage d'un outil de serrage à l'intérieur de la planche de bord 16.

De façon à minimiser la transmission de bruit entre le compartiment avant du véhicule et l'intérieur de l'habitacle, il est connu de disposer un premier élément 22 d'insonorisation entre la partie supérieure du tablier avant 10 et la face inférieure 23 de la planche de bord 16.

Le premier élément 22 d'insonorisation permet notamment d'obturer l'ouverture 19.

Le tablier avant 10 est généralement constitué par un élément métallique 24, dont la face arrière est revêtue par un second élément d'insonorisation 25 qui permet de minimiser la transmission de bruit à l'intérieur de l'habitacle.

En général, la fixation du premier élément d'insonorisation 22 sur le tablier 10 est réalisée par vissage. Ainsi des vis 26 et 28 traversent une zone de fixation avant 30 et une zone de fixation arrière 32 respectivement du premier élément d'insonorisation 22. De façon à réduire le risque de déchirement du premier élément d'insonorisation 22, il est fréquent de le renforcer par des inserts 34 et 35.

Le coût du premier élément d'insonorisation 22 comportant des inserts 34, 35 est élevé. De plus, la fixation du premier élément d'insonorisation 22 présente les inconvénients décrits ci-dessus.

De façon à résoudre ces problèmes, l'invention propose l'agencement représenté à la figure 2.

L'invention propose que le tablier 10 comporte une forme en creux dans laquelle s'engage la zone de fixation avant 30 du premier élément d'insonorisation 22 de façon à fixer l'avant du premier élément d'insonorisation 22 sur le tablier 10.

Selon cet agencement, les assemblages vissés sont supprimés ce qui permet une diminution importante du coût du premier élément d'insonorisation 22.

De plus, la fixation du premier élément d'insonorisation 22 est fortement simplifiée.

Conformément aux figure 2 à 6, la forme en creux 36 est réalisée dans le second élément d'insonorisation 25 du tablier avant 10.

Avantageusement, le premier élément d'insonorisation 22 est constitué d'un premier matériau absorbant acoustique 38 dont la face inférieure est revêtue par un premier matériau de renfort 40. De façon similaire, le second élément d'insonorisation 25 est constitué d'un second matériau absorbant acoustique 42 dont la face arrière est revêtue par un second matériau de renfort 44.

Les premier et second matériaux absorbants acoustiques 38 et 42 peuvent consister en une mousse expansée présentant une capacité élevée d'absorption des vibrations.

Les premier et second matériaux de renfort 40 et 44 peuvent par exemple être une mousse de composition similaire à celles des matériaux absorbants 38 et 42 et de structure plus dense que celle utilisée pour les premier et second matériaux absorbants acoustiques 38 et 42. Ils peuvent aussi comporter une armature textile.

Les faces extérieures des matériaux de renfort 40, 44, par rapport aux matériaux absorbants 38 et 42 sur lequel ils sont fixés, permettent avantageusement de réaliser l'unité esthétique des éléments d'insonorisation 22 et 25 avec l'intérieur de l'habitacle. Ainsi les faces extérieures des matériaux de renfort 40, 44 ont une couleur et un aspect assortis au reste de l'habitacle.

De façon à minimiser le coût de fabrication de l'agencement, la forme en creux 36 est réalisée dans le second élément d'insonorisation 25, lors de sa fabrication.

La zone de fixation arrière du premier élément d'insonorisation 22 comporte des moyens de fixation 50 qui coopèrent avec des moyens 52 complémentaires qui sont situés sur la face inférieure 23 de la planche de bord 16.

Les moyens de fixation 50 et 52 peuvent être par exemple des moyens adhésifs, ou des moyens du type à boucles et à crochets complémentaires.

Avantageusement, les moyens de fixation 50 et 52 permettent d'absorber des variations importantes de leurs positions respectives.

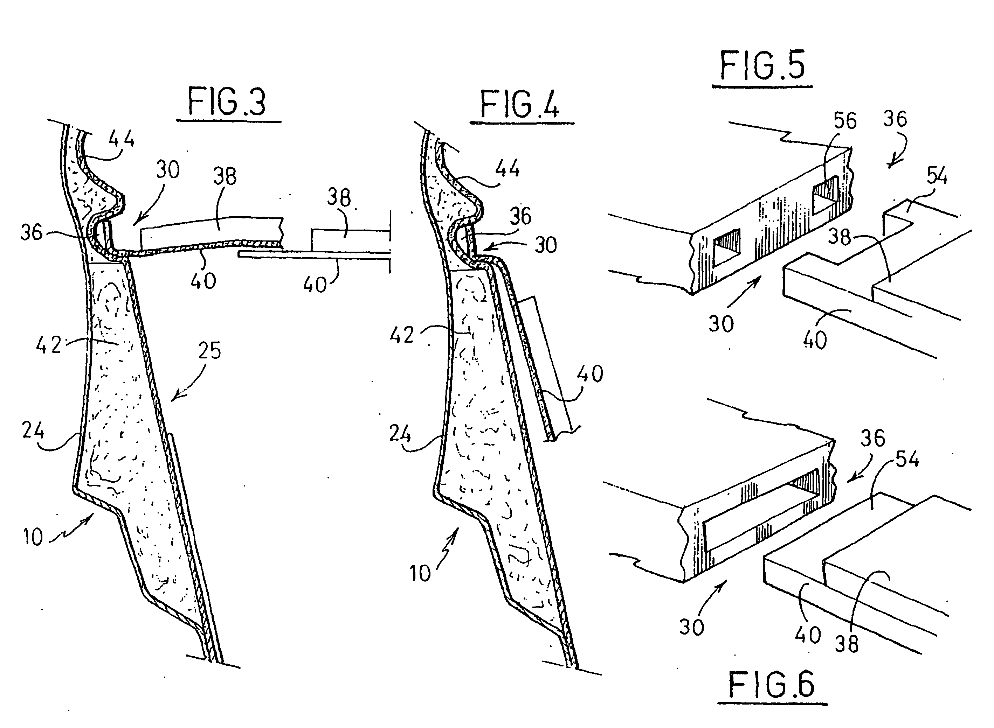

La fixation du premier élément d'insonorisation 22 sur le tablier 10 va être décrit en détail, en se rapportant plus particulièrement aux figures 3 et 4.

La figure 3 représente la partie avant du premier élément d'insonorisation 22.

La représentation en trait fin illustre le premier élément d'insonorisation 22 avant sa fixation dans le tablier 10. La représentation en trait fort illustre quant à elle la partie avant du premier élément d'insonorisation 22 fixé dans le tablier 10.

Ici, le premier matériau de renfort 40 dépasse longitudinalement du bord avant du matériau absorbant acoustique 38. La partie du matériau de renfort 40 qui dépasse constitue ainsi la zone de fixation 30 du premier élément 22.

Le premier élément d'insonorisation 22 est fixé au tablier avant 10 par un simple mouvement de translation longitudinale vers l'avant du véhicule, de façon que la zone de fixation 30 du premier élément 22 s'emboîte dans la forme en creux 36 réalisée dans le second élément d'insonorisation 25. La durée de cette étape de fixation est très réduite: De plus, la position de l'opérateur est assez confortable.

Ici, la zone de fixation 30 est tordue de façon que le bord avant du premier élément d'insonorisation 22 soit coincé entre les parois supérieure et inférieure de la forme en creux 36.

La zone de fixation avant 30 du premier élément d'insonorisation 22 qui est le bord avant du matériau de renfort 40 peut consister en des languettes 54, conformément à la figure 5. La forme en creux 36 peut alors être constituée de tronçons 56 creux qui s'étendent sur une largeur correspondant à la largeur de la languette 54 en vis à vis.

Selon une variante, représentée à la figure 6, la languette 54 peut s'étendre sur la totalité de la largeur du premier élément d'insonorisation 22. Dans ce cas, la largeur de la forme en creux 36 correspond à la largeur de la languette 54.

Selon une autre variante, l'une au moins des languettes 54 du premier élément 22 peut être conformée selon une forme correspondant sensiblement à sa position lorsqu'elle est engagée dans la forme en creux 36. Cela permet de diminuer l'effort d'engagement à appliquer sur le premier élément 22.

Un tel agencement pour la fixation du premier élément d'insonorisation 22 sur le tablier avant 10 peut être indifféremment utilisé pour le premier élément d'insonorisation 22 se trouvant en vis-à-vis de la place du passager ou de la place du conducteur.

Lorsqu'il s'agit de la fixation du premier élément d'insonorisation 22 sur la partie du tablier avant se trouvant en vis-à-vis du passager, l'opérateur, par un simple geste de bas en haut, vient appliquer les moyens de fixation 50 de la zone de fixation arrière 32 sur les moyens de fixation 52 complémentaires de la face inférieure 23 de la planche de bord 16. Cette opération simple et rapide ne nécessite aucun outillage particulier. Elle peut être effectuée à l'aveugle, ce qui ne nécessite aucune contorsion de l'opérateur pour fixer la zone 32 sous la planche de bord 16.

Lorsqu'il s'agit de la fixation du premier élément d'insonorisation 22 sur la partie du tablier avant se trouvant en vis-à-vis du conducteur, la fixation de la zone arrière 32 ne peut pas être réalisée tant que la colonne de direction 20 n'est pas fixée à la planche de bord 16 par le dispositif de fixation 21.

Ainsi, l'opérateur lâche le premier élément d'insonorisation 22. Le bord arrière repose alors sur les leviers de pédales 14, conformément à la figure 4. La zone de fixation 30 est maintenue dans la forme en creux 36.

Lorsque la colonne de direction 20 est fixée par rapport à la planche de bord 16, c'est-à-dire que l'opérateur a verrouillé le dispositif de fixation 21, la zone de fixation 32 est facilement fixée sous la planche de bord 16 par les moyens de fixation 50 et 52, de façon similaire au premier élément d'insonorisation 22 passager.

L'ouverture 19 est alors obturée par le premier élément d'insonorisation 22 qui permet ainsi de diminuer fortement la transmission des vibrations et du bruit de la partie avant du véhicule vers l'habitacle.

Cette opération qui ne requiert aucun outillage particulier, ni geste spécifique, peut être réalisée par l'opérateur qui fixe la colonne de direction 20.

La fixation des premiers éléments d'insonorisation 22 selon l'invention est facilitée et son coût est réduit.

## Revendications

1. Agencement pour la fixation d'un premier élément d'insonorisation (22) sur le tablier avant (10) d'un véhicule automobile, ledit tablier avant (10) ayant une zone d'orientation globalement verticale, **caractérisé en ce que** le tablier avant (10) comporte un second élément d'insonorisation (25) et **en ce que** dans la zone d'orientation globalement verticale de ce second élément d'insonorisation (25) est formé au moins un logement en creux (36), dans lequel s'engage une zone de fixation avant (30) du premier élément d'insonorisation (22) de façon à fixer l'avant du premier élément d'insonorisation (22) sur le second élément d'insonorisation (25).

2. Agencement selon la revendication 1, **caractérisé en ce que** la forme en creux (36) est réalisée dans le second élément d'insonorisation (25) du tablier avant (10), lors de sa fabrication.

3. Agencement selon l'une des revendication précédentes, **caractérisé en ce que** le premier et/ou le second élément d'insonorisation (22, 25) est/sont constitué/s d'au moins un premier et/ou un second matériau absorbant acoustique (38, 42) dont une face est revêtue au moins partiellement d'au moins un premier et/ou un second matériau de renfort (40, 44) respectivement, qui comporte une structure et/ou une composition différente de celle dudit matériau absorbant (38, 40).

4. Agencement selon la revendication précédente, **caractérisé en ce que** le premier et/ou le second matériau absorbant acoustique (38, 40) est/sont constitué/s d'une première et/ou d'une seconde mousse respectivement.

5. Agencement selon l'une des revendications 3 ou 4, **caractérisé en ce que** le second matériau de renfort (44) revêt la face arrière du second matériau absorbant acoustique (42) du second élément d'insonorisation (25).

6. Agencement selon l'une quelconque des revendications 3 à 5, **caractérisé en ce que** le premier et/ou le second matériau de renfort (40, 44) comporte/nt une première et/ou une seconde armature textile respectivement.

7. Agencement selon l'une quelconque des revendications 3 à 6, **caractérisé en ce que** la zone de fixation avant (30) du premier élément d'insonorisation (22) est un bord avant du premier matériau de renfort (40) qui coopère avec la forme en creux (36).

8. Agencement selon la revendication 7, **caractérisé en ce que** la zone de fixation avant (30) du premier élément d'insonorisation (22) pénètre longitudinalement dans la face arrière de la zone d'orientation globalement verticale du tablier (10), dans la forme en creux (36).

9. Agencement selon l'une quelconque des revendications précédentes, **caractérisé en ce que** la zone de fixation avant (30) du premier élément d'insonorisation (22) comporte au moins une languette (54), et **en ce que** la largeur de la forme en creux (36, 56) correspond sensiblement à la largeur de la languette (54).

10. Agencement selon la revendication précédente, **caractérisé en ce que** la languette (54) s'étend sur la totalité de la largeur du premier élément d'insonorisation (22).

11. Agencement selon l'une quelconque des revendications précédentes, **caractérisé en ce que** l'extrémité arrière du premier élément d'insonorisation (22) comporte des moyens de fixation (50) qui coopèrent avec des moyens complémentaires de fixation (52) situés sous la planche de bord (16) du véhicule, de façon que, lors de l'assemblage du premier élément d'insonorisation (22), celui-ci est fixé à l'avant sur le tablier avant (10) et à l'arrière sous la planche de bord (16).

12. Agencement selon la revendication précédente, **caractérisé en ce que** les moyens de fixation (50) et les moyens complémentaires de fixation (52) sont des moyens adhésifs.

13. Agencement selon la revendication 11, **caractérisé en ce que** les moyens de fixation (50) et les moyens complémentaires de fixation (52) sont du type à boucles et à crochets complémentaires.

## Patentansprüche

1. Anordnung zur Befestigung eines ersten Schalldämpfungselementes (22) auf der vorderen Schottwand (10) eines Kraftfahrzeuges, wobei die vordere Schottwand (10) einen Abschnitt mit im Wesentlichen vertikaler Ausrichtung aufweist, **dadurch gekennzeichnet, dass** die vordere Schottwand (10) ein zweites Schalldämpfungselement (25) umfasst, und **dadurch**, dass im Abschnitt mit im Wesentlichen vertikaler Ausrichtung dieses zweiten Schalldämpfungselementes (25) mindestens ein Hohlsitz (36) ausgebildet ist, in welchem ein vorderer Befestigungsabschnitt (30) des ersten Schalldämpfungselementes (22) eingreift, um so den vorderen Teil des ersten Schalldämpfungselementes (22) auf dem zweiten Schalldämpfungselement (25) zu befestigen.

2. Anordnung gemäß Anspruch 1, **dadurch gekennzeichnet, dass** die Hohlform (36) im zweiten Schalldämpfungselement (25) der vorderen Schottwand (10) während dessen Herstellung verwirklicht wird.

3. Anordnung gemäß einem der vorhergehenden Ansprüche, **dadurch gekennzeichnet, dass** das erste und/oder das zweite Schalldämpfungselement (22, 25) aus wenigstens einem ersten und/oder einem zweiten schallabsorbierenden Material (38, 42) gebildet ist/sind, dessen eine Fläche zumindest teilweise von jeweils wenigstens einem ersten und/oder zweiten Verstärkungsmaterial (40, 44) bedeckt ist, welches eine Struktur und/oder eine Zusammensetzung verschieden von derjenigen des absorbierenden Materials (38, 40) umfasst.

4. Anordnung gemäß dem vorhergehenden Anspruch, **dadurch gekennzeichnet, dass** das erste und/oder zweite schallabsorbierende Material (38, 40) aus jeweils einem ersten und/oder einem zweiten Schaum gebildet ist/wird.

5. Anordnung gemäß einem der Ansprüche 3 oder 4, **dadurch gekennzeichnet, dass** das zweite Verstärkungsmaterial (44) die Rückfläche des zweiten schallabsorbierenden Materials (42) des zweiten Schalldämpfungselementes (25) bedeckt.

6. Anordnung gemäß einem der Ansprüche 3 bis 5, **dadurch gekennzeichnet, dass** das erste und/oder das zweite Verstärkungsmaterial (40, 44) jeweils eine erste und/oder eine zweite Textilumhüllung aufweist/aufweisen.

7. Anordnung gemäß einem der Ansprüche 3 bis 6, **dadurch gekennzeichnet, dass** der vordere Befestigungsabschnitt (30) des ersten Schalldämpfungselementes (22) ein vorderer Rand des ersten Verstärkungsmaterials (40) ist, welcher mit der Hohlform (36) zusammenwirkt.

8. Anordnung gemäß Anspruch 7, **dadurch gekennzeichnet, dass** der vordere Befestigungsabschnitt (30) des ersten Schalldämpfungselementes (22) in Längsrichtung in die Rückfläche des Abschnittes der Schottwand (10) mit im Wesentlichen vertikaler Ausrichtung in die Hohlform (36) eindringt.

9. Anordnung gemäß einem der vorhergehenden Ansprüche, **dadurch gekennzeichnet, dass** der vordere Befestigungsabschnitt (30) des ersten Schalldämpfungselementes (22) wenigstens eine Zunge (54) aufweist, und **dadurch**, dass die Breite der Hohlform (36, 56) im Wesentlichen der Breite der Zunge (54) entspricht.

10. Anordnung gemäß dem vorhergehenden Anspruch, **dadurch gekennzeichnet, dass** die Zunge (54) sich über die gesamte Breite des ersten Schalldämpfungselementes (22) erstreckt.

11. Anordnung gemäß einem der vorhergehenden Ansprüche, **dadurch gekennzeichnet, dass** das hintere Ende des ersten Schalldämpfungselementes (22) Befestigungsmittel (50) umfasst, die mit unter dem Armaturenbrett (16) des Fahrzeuges angeordneten komplementären Befestigungsmitteln (52) zusammenwirken, so dass während des Einbaus des ersten Schalldämpfungselementes (22) dieses vorne auf der vorderen Schottwand (10) befestigt wird und hinten unter dem Armaturenbrett (16).

12. Anordnung gemäß dem vorhergehenden Anspruch, **dadurch gekennzeichnet, dass** die Befestigungsmittel (50) und die komplementären Befestigungsmittel (52) Klebemittel sind.

13. Anordnung gemäß Anspruch 11, **dadurch gekennzeichnet, dass** die Befestigungsmittel (50) und die komplementären Befestigungsmittel (52) vom komplementären Haken-Ösen-Typ sind.

## Claims

1. An arrangement for fastening a first soundproofing member (22) on the front bulkhead (10) of an automobile vehicle, the front bulkhead (10) having a globally vertical zone of orientation, **characterised in that** the front bulkhead (10) comprises a second soundproofing member (25) and **in that** at least one hollow housing (36) is formed in the globally vertical zone of orientation of this second soundproofing member (25), in which housing a front fastening zone (30) of the first soundproofing member (22) is engaged so as to secure the front of the first soundproofing member (22) on the second soundproofing member (25).

2. An arrangement as claimed in claim 1, **characterised in that** the hollow shape (36) is obtained in the second soundproofing member (25) of the front bulkhead (10) during its manufacture.

3. An arrangement as claimed in one of the preceding claims, **characterised in that** the first and/or the second soundproofing member (22, 25) is/are formed by at least a first and/or a second sound absorbing material (38, 42), one surface of which is covered at least partially by at least a first and/or a second reinforcing material (40, 44) respectively, which comprise(s) a structure and/or a composition different from that of the absorbing material (38, 40).

4. An arrangement as claimed in the preceding claim, **characterised in that** the first and/or the second sound absorbing material (38, 40) is/are formed by a first and/or a second foam respectively.

5. An arrangement as claimed in one of claims 3 or 4, **characterised in that** the second reinforcing material (44) covers the rear surface of the second sound absorbing material (42) of the second soundproofing member (25).

6. An arrangement as claimed in any one of claims 3 to 5, **characterised in that** the first and/or the second reinforcing material (40, 44) comprise(s) a first and/or a second textile reinforcement respectively.

7. An arrangement as claimed in any one of claims 3 to 6, **characterised in that** the front fastening zone (30) of the first soundproofing member (22) is a front edge of the first reinforcing material (40) which cooperates with the hollow shape (36).

8. An arrangement as claimed in claim 7, **characterised in that** the front fastening zone (30) of the first soundproofing member (22) penetrates longitudinally into the rear surface of the globally vertical zone of orientation of the bulkhead (10) into the hollow shape (36).

9. An arrangement as claimed in any one of the preceding claims, **characterised in that** the front fastening zone (30) of the first soundproofing member (22) comprises at least one tongue (54) and **in that** the width of the hollow shape (36, 56) corresponds substantially to the width of the tongue (54).

10. An arrangement as claimed in the preceding claim, **characterised in that** the tongue (54) extends over the entire width of the first soundproofing member (22).

11. An arrangement as claimed in any one of the preceding claims, **characterised in that** the rear end of the first soundproofing member (22) comprises fastening means (50) which cooperate with complementary fastening means (52) disposed below the dashboard (16) of the vehicle so that, during assembly of the first soundproofing member (22), it is secured at the front to the front bulkhead (10) and at the rear below the dashboard (16).

12. An arrangement as claimed in the preceding claim, **characterised in that** the fastening means (50) and the complementary fastening means (52) are adhesive means.

13. An arrangement as claimed in claim 11, **characterised in that** the fastening means (50) and the complementary fastening means (52) are of the complementary loop and hook type.
